(19) Europäisches Patentamt
European Patent Office
Office européen des brevets

(11) **EP 0 606 361 B1**

(12) **EUROPEAN PATENT SPECIFICATION**

(45) Date of publication and mention
of the grant of the patent:
**22.04.1998 Bulletin 1998/17**

(51) Int Cl.$^6$: **C08L 23/28**, C08L 21/00,
A62D 5/00, A62B 18/02

(21) Application number: **92921194.4**

(22) Date of filing: **29.09.1992**

(86) International application number:
**PCT/CA92/00452**

(87) International publication number:
**WO 93/07211 (15.04.1993 Gazette 1993/10)**

(54) **Rubber Composition**

Gummimischung

Mélange de caoutchouk

(84) Designated Contracting States:
**DK NL**

(30) Priority: **30.09.1991 CA 2052542**

(43) Date of publication of application:
**20.07.1994 Bulletin 1994/29**

(73) Proprietor: **HER MAJESTY THE QUEEN as
represented by
THE MINISTER OF NATIONAL DEFENCE OF HER
MAJESTY'S CANADIAN GOVERNMENT
Ottawa, Ontario K1A 0K2 (CA)**

(72) Inventors:
• **COLLYER, John, C.
Nepean, Ontario K2H 7V2 (CA)**

• **CLARK, John, R.
Carleton Place, Ontario K7C 3P1 (CA)**
• **ZEMANEK, Milan
St. Jerome, Quebec J14 4E1 (CA)**

(74) Representative: **Perry, Robert Edward
GILL JENNINGS & EVERY
Broadgate House
7 Eldon Street
London EC2M 7LH (GB)**

(56) References cited:
**EP-A- 0 246 745          EP-A- 0 388 248
WO-A-90/11327**

**Description**

This invention relates to rubber compositions having improved ageing characteristics.

Natural rubber has been the choice of rubber chemists for gas mask facepieces since the introduction of respiratory protecting gas masks towards the end of World War I. It has many advantages over synthetic elastomers for facepiece use, including comfort, high resiliency, high strength, easy processing and moulding, non-dermatitic properties and good low temperature flexibility. However, as protective equipment develops and improves, the materials they are made from are required to have ever-increasing performance characteristics.

The basic property which influences the material selection is its impermeability to chemical warfare (CW) agents, specifically H and GB agents. The current standard accepted by many countries is twenty-four (24) hour protection against H-agent (dichlorodiethyl sulfide).

With the advent of new mask designs, some of the other properties of the material require improvement. For example, it is highly desirable to maximise the Modulus 500% to the range of 6.21-11.04 MPa (900-1600 psi), while keeping the Permanent Set at 500% below about 12%. Various synthetic rubber formulations were evaluated. The material studies were based upon the knowledge that, when the final material was chosen, it would be amenable to the commercial injection moulding operation now used in industry. However, it has been found that gas mask facepieces made from various rubber compositions are susceptible to cracking under high stress and high ozone concentrations.

EP-A-0246745 discloses rubber composition comprising a liquid EPDM (having a molecular weight of 1000 to 15000) and a curing agent.

EP-A-0388248 discloses halobutyl rubber compositions which are especially suitable for the preparation of material resistant to nuclear, bacteriological and chemical warfare agents, more specifically mustard gas.

According to the present invention, a composition comprises:

a) 100 parts by weight halobutyl rubber;
b) 1.7 to 6 parts by weight of a liquid ethylene-propylene-diene monomer elastomer; and
c) 0.5 to 3 parts by weight of an antioxidant/antiozonant curing agent selected from para-phenylenediamine and a diphenylene-acetone condensation product.

The halobutyl rubber is preferably a bromobutyl rubber.

The liquid ethylene-propylene-diene (EPDM) elastomer is typically a low molecular weight (1000 to 15000) liquid at room temperature and acts as a reactive plasticiser to improve certain physical properties of the rubber. one such elastomer is sold under the trademark Trilene by Uniroyal Chemical Co. Inc. Trilene 65 has been found to be effective.

It has been found that the EPDM elastomer is most effective in small amounts. For example, replacement of 15 phr of bromobutyl rubber with Trilene 65 unacceptably reduces the tensile strength of the bromobutyl rubber. At 10 phr, low temperature flexibility is unacceptable. These physical properties were found to improve as the amount of EPDM was lowered further to 5 phr.

The curing agent is, for example, Agerite white, a trademark for a paraphenylene diamine, supplied by Vanderbilt, or Aminox, a trademark for a diphenylene-acetone condensation product sold by Uniroyal.

The composition of the invention may also comprise 0.5 to 1.02 parts by weight of a wax selected from petroleum wax and microcrystalline wax. For example, the microcrystalline wax Sunproof (trademark) Canadian has been found effective. In most cases, it was found that the ozone resistance was adequate without including the wax.

A rubber accelerator may also be included as part of the additive to enhance the curing. Methazate, a trademark for zinc dimethyl dithiocarbamate, has been found to be effective in this respect, e.g. in an amount of 0.5 to 3 parts.

The composition preferably comprises a metal oxide curing agent such as zinc oxide (such materials are commonly included in rubber formulations), in an amount of 3 to 6 parts, preferably 3.5 to 4.5 parts ZnO. In halobutyl rubbers, such as bromo- and chlorobutyl rubber, synergism between the zinc oxide curing agent and certain types of antioxidant/ antiozonant has been shown to enhance certain physical properties including ozone resistance.

Applicant has also found that by coupling a liquid EPDM elastomer with such antioxidant/antiozonants a synergistic effect results. That is, the liquid EPDM by itself is only as good as or slightly better than a standard antiozonant. However, when coupled with an antioxidant/antiozonant according to the invention, halobutyl rubber samples at 100 % extension for 3500 hours show no sign of ozone attack.

EXPERIMENTAL

Certain basic properties are essential for rubber gas mask facepieces. These include resistance to the penetration and re-emission of CW agents and minimum levels of tensile strength, modulus and tear strength. The rubber compositions are also required to be injection moulded to form a gas mask facepiece in a sufficiently short time to be economically viable for industrial production. Gas mask facepiece moulds are normally quite complex and a good moulding compound is required to achieve a satisfactory product.

The penetration of H-agent (mustard gas) through rubbers is usually tested over the required 24 hours at 30° C using a sample with the normal thickness of material found in a gas mask facepiece (1.9 mm). When polymer blends are used, particularly with polymers not resistant to mustard gas, the change of the penetration time can be significant. Also when penetration of a chemical warfare agent occurs, the re-emission of this agent from the surface of the rubber can present a serious hazard. Thus, for each EPDM blend utilized along with some of the other compounds, it was necessary to evaluate the mustard gas penetration and re-emission.

H Penetration Test

Chemical agent penetration testing is carried out as follows. Three samples of facepiece rubber material (12.6 sq. cm and 2mm in thickness) are challenged with 5 1-microlitre drops of agent at 30° C and the penetration through the material followed using a gas chromatograph. The material is considered to be a failure if more than 5 micrograms of agent penetrates through it.

H Re-Emission Test

Chemical agent re-emission testing is carried out as follows. Three samples of facepiece rubber material, 5 cm in diameter and 2mm in thickness are washed with 2-propanol to remove any surface contamination. Five 1 microlitre-drops of agent are applied to the surface of the test sample in a quincunx pattern 10 mm minimum spacing. This is then left for 30 minutes at a temperature of 25 + 2° C.

Once the test sample has been contaminated for 30 minutes it is washed with a stream of 2-propanol from a wash bottle. At least 50 mL of liquid is used and a thorough washing is achieved. The sample is then placed in an inclined position until all the 2-propanol has evaporated and then placed in a test cell. The agent that desorbs from the surface of the rubber over the next 24 hours at a temperature of 30° C is then collected and measured. A stream of air (30 mL/min) passing over the sample carries the agent through a sampling device and is analyzed by a gas chrcmatograph.

The procedure used fcr evaluating stress cracking cf an elastomer sample involves 3 different ccnditions. These are:

1) OUTSIDE: - on the roof of the building, facing south and presented at a 45 degree angle to the sun (ASTM D518 Method B);
2) INDOOR: - under fluorescent lighting in the laboratory; and
3) OZONE CHAMBER - in an atmosphere of 50 parts per hundred million (pphm) of ozone and 40° C thus producing an accelerated level of ageing (ASTM D1149).

Two methods of testing are used in the above ASTM tests. One is the bent-loop test which gives a varying amount of stress up to 25% elongation as shown in ASTM D518 Method B. The second is the ASTM D412 dumbbell, Die C, stretched to 20%, 50% and 100% elongation respectively using a benchmarker as shown is ASTM D412, Method A. For the purposes of this evaluation no OUTDOOR or INDOOR test were carried out as these methods take years to show any signs of cracking.

The laboratory trials that follow involved the use of a liquid EPDM elastomer with aromatic amines as curing agents. Amines Agerite White and Aminox were included. All the above curing systems were used in conjunction with zinc oxide and in some cases a microcrystalline wax, in existing bromobutyl rubber facepiece formulations.

## Example 1

A black coloured gas mask facepiece (coded 702-version II) made by injection moulding, having the following formulation was tested.

| Bromobutyl X2 | 100.0 |
|---|---|
| Struktol 60 NS | 2.2 |
| MBTS | 1.1 |
| N-110 | 41.7 |
| Trilene 65 | 4.2 |
| Paraffin wax | 0.6 |
| TP 90 B | 8.3 |

(continued)

| | |
|---|---|
| Dietylene Glycol | 0.1 |
| Zn0 90% | 5.9 |
| Agerite White | 0.6 |
| Methazate | 0.7 |
| Sulphur | 0.3 |
| | $\overline{165.7}$ |

The proportions are expressed as parts per one hundred parts of bromobutyl X2 rubber.
Thus the additive according to the invention comprises

| | |
|---|---|
| Trilene 65 | 4.2 phr, |
| Agerite White | 0.6 phr, and |
| Paraffin Wax | 0.6 phr |

The 5.9 phr zinc oxide (90%) is already part of the existing rubber composition. The physical properties are as follows:

| Property * | On tensile sheet moulded at 160 °C /5½ min. | On facepiece injection moulded 160 °C / 6 min. | On facepiece injection moulded 160 °C / 6 min. |
|---|---|---|---|
| Hardness Shore A | 47 | * | * |
| Tensile MPa (psi) | 17.97 (2605) | 17.26 (2501) | 16.68 (2418) |
| Elongation % | 761 | 705 | 714 |
| Tensile Set 500% MPa (psi) | 10.84 (1571) | 11.12 (1612) | 10.51 (1523) |
| Tensile Set 200% MPa (psi) | 2.38 (345) | 2.59 (376) | 2.42 (350) |
| Tear Die C kN/M (lb/in) | 40.5 (230) | ---- | --- |
| Tensile Set 500% 10/10 | 7.6 | 7.8 | 7.1 |
| Resilience Bashore % | 10 | * | * |
| Low Temp. Stiffness T2 | - 21 °C | ---- | --- |
| Low Temp. Stiffness T5 | - 34 °C | ---- | --- |
| The properties meet specification except Low Temperature Stiffness T2. (-25°C is the reading required) | | | |

## Example 2

Black bromobutyl formulation (carbon black filled), factory mixed. Coded 910.5, modified version of 702-version II, described in example 1

| | |
|---|---|
| Bromobutyl X2 | 100.0 |
| Struktol 60 NS | 2.2 |
| MBTS | 1.1 |
| Black N-110 | 23.6 |
| Trilene 65 | 4.2 |
| Black N-774 | 18.1 |
| Sunproof Canadian | 1.0 |
| DC 200 (12,500) | 1.0 |
| TP 90 B | 8.3 |
| Diethylene Glycol | 0.1 |
| Zn0 90% | 5.6 |
| Agerite White | 1.5 |
| Methazate | 0.4 |

(continued)

| Sulphur | 0.2 |
|---|---|
|  | $\overline{167.3}$ |

Thus, the additive according to the invention comprises:

| Trilene 65 | 4.2 phr |
|---|---|
| Agerite White | 1.5 phr |
| Sunproof Canadian | 1.0 phr |

Rheometer curve data at 30/minutes/25 range/1° Arc/ 160°C (320°F)

| T4 | 1.8 minutes |
|---|---|
| T90 | 8.0 minutes |
| T100 estimated | 15.0 minutes |

Cure time of compression moulded disc of 5.08 cm in diameter by 1.27 cm (2" ø by 1/2")thick is 6 1/2 minutes at 160°C (320°F)

Tensile slabs were moulded for 7 1/2 minutes at 160°C (320°F).

XC4 large facepieces were moulded on a Rep m/c by injection moulding.

Surface temperatures of inside cavity, depending on location, were stabilized at 151.6 to 154.4°C (305 to 310°F). Facepieces were moulded at the following times:

20 facepieces for 6 minutes;
20 facepieces for 8 minutes;
10 facepieces for 10 minutes.

Different cure times were used to establish their influence on physical properties, blooming and ozone resistance. This formulation behaved very well during factory processing and also during the injection moulding.

Physical test results indicate that they are not influenced by cure time. Facepieces exposed to lab atmosphere, to date 14 days, show slight acceptable bloom and a dull finish. Again, bloom is not influenced by cure time.

Ozone resistance by dumbbells stretched to 100%, passed 72 hours, and to date 7 days (168 hours), only one crack has developed on one dumbbell at 8 minutes cure time.

| PHYSICAL PROPERTIES | | SLABS | FINISH PRODUCTS | | |
|---|---|---|---|---|---|
|  | | 7½ minutes | 6 minutes | 8 minutes | 10 minutes |
| Hardness Shore *A | | 46 | 45 | 46 | 46 |
| Ultimate Tensile Strength MPa(psi) | | 14.79(2145) | 15.55(2255) | 14.73(2136) | 15.23(2209) |
| Ultimate Elongation % | | 690 | 708 | 668 | 699 |
| Die C | Tensile Stress at 500% MPa(psi) | 9.97(1446) | 10.06(1459) | 10.11(1466) | 9.98(1447) |
|  | Tensile Stress at 200% MPa(psi) | 2.89(419) | 2.80(406) | 2.70(391) | 2.75(399) |
| Tear Resistance psi KN/M (lb/in) | | 37.3(2.12) | 45.1(256) | 44.7(254) | 42.6(242) |
| Permanent Set 500% | 10/10 | 6.87 | 6.56 | 6.26 | 7.05. |
| Ozone 50 pphm / 40 °C | 24 hours | Passed | Passed | Passed | Passed |
| Elongation 100% | 48 hours | Passed | Passed | Passed | Passed |
| Dumbbell sample | 72 hours | Passed | Passed | Passed | Passed |
| Stiffness | T2 | - 25.5 °C | - 28 °C | — | — |

(continued)

| PHYSICAL PROPERTIES | | SLABS | FINISH PRODUCTS | | |
|---|---|---|---|---|---|
| | | 7½ minutes | 6 minutes | 8 minutes | 10 minutes |
| | T5 | - 36.0 °C | - 36 °C | — | — |
| Resilience Bashore | | 9 | 8 | 8 | 8 |
| | with powder | 11 | 10 | 10 | 10 |
| Resilience Button (10 minutes) | | 9 | — | — | — |
| | with power | 11 | — | — | — |
| Ageing 96 hrs 80 °C | δ * Duro | + 6 | + 3 | + 4 | + 6 |
| | δ % Tensile Strength | - 5.39 | - 6.96 | - 8.89 | - 5.18 |
| | δ % Elongation | - 5.85 | - 11.02 | - 5.84 | - 3.10 |
| | δ % Tear Resistance | + 12.89 | - 9.11 | - 12.34 | - 1.79 |

## Example 3

Black bromobutyl formulation (silica filled) , factory mixed, coded 526

| | |
|---|---|
| Bromobutyl X2 | 100.0 |
| Black N-110 | 2.6 |
| Hisil 532 EP | 35.9 |
| Diethylene Glycol | 1.3 |
| Trilene 65 | 4.1 |
| Sunproof Canadian | 1.0 |
| DC 200 (12,500) | 1.0 |
| TP 90 B | 7.7 |
| Zinc Oxide 90% | 5.2 |
| Aminox | 2.0 |
| Methazate | 2.1 |
| Sulphur | 0.3 |
| Silane SI 69 | 2.1 |
| Silane A 1100 | 1.3 |
| | 166.6 |

Thus, the additive according to the invention comprises:

| | |
|---|---|
| Trilene | 4.1 phr |
| Aminox | 2.0 phr |
| Sunproof Canadian | 1.0 phr |

Rheometer curve data at 30/minutes/25 range/1° Arc/ 160°C (320°F)

| Before addition of Silane A1100 | After the addition of Silane A1100 |
|---|---|
| T4 -2.4 minutes<br>T90 -10.0 minutes<br>T100-20.0 minutes (estimated) | T4 1.4 minutes<br>T90 11.0 minutes<br>T100 27.5 minutes |

Cure time 7 1/2 minutes-cure time 6 minutes
Cure time is established on a compression moulded disc of 5.08 cm in diameter by 1.27 cm (2" ø by 1/2") thick at 160 °C (320 °F)

Tensile slabs were moulded for 8 minutes at 160 °C (320 °F). XC4 large facepieces were moulded on a Rep m/c by injection moulding. Surface temperature of inside cavity, depending on location, were stabilized at 151.6 to 154.4 °C (305 to 310 °F).

Facepieces were moulded at the following times:.

25 facepieces for 7 minutes;
25 facepieces for 10 minutes.

The reason for the addition of Silane A1100, over and above the Silane SI 69, is that the modulus 500% values with only the SI 69 5.86 were at 5.86 KPa (850 psi). After adding the Silane A 1100, the modulus values went up to 9.31 KPa (1350 psi).

Exposed facepieces to lab atmosphere, to date 13 days, show slight acceptable bloom, and a finish which is duller than in the case of the 910.5 formula. Again, bloom does not appear to be influenced by cure time so far.

Ozone resistance by dumbbells stretched to 100%, passed 72 hours, and to date 7 days (173 hours), some cracks developed, on an average 1 per sample, with no propagation in size. The 10 minutes facepiece dumbbell so far (173 hours) has not developed any crack.

| PHYSICAL PROPERTIES | | SLABS | FINISH PRODUCTS | |
|---|---|---|---|---|
| | | 8 minutes | 7 minutes | 10 minutes |
| Hardness Shore *A | | 40 | 40 | 40 |
| Ultimate Tensile Strength MPa(psi) | | 13.81(2003) | 12.44(1804) | 12.46(1807) |
| Ultimate Elongation % | | 705 | 677 | 630 |
| Die C | Tensile Stress at 500% MPa(psi) | 9.35(1356) | 8.72(1265) | 9.43(1368) |
| | Tensile Stress at 200% MPa(psi) | 2.19(318) | 1.85(268) | 2.06(301) |
| Tear Resistance KN/M (lb/in) | | 30.5(173) | 37.0(210) | 35.6(202) |
| Permanent Set 500% | 10/10 | 4.05 | 4.36 | 5.46 |
| Ozone 50 pphm / 40 °C | 24 hours | Passed | Passed | Passed |
| Elongation 100% | 48 hours | Passed | Passed | Passed |
| Dumbbell sample | 72 hours | Passed | Passed | Passed |
| Stiffness | T2 | - 31.5 °C | - 32.0 °C | — |
| | T5 | - 39.5 °C | - 39.0 °C | — |
| Resilience Bashore | | 9 | 10 | 11 |
| | with powder | 11 | 12 | 13 |
| Resilience Button (10 minutes) | | 9 | — | — |
| | with power | 11 | — | — |
| Ageing 96 hrs 80 °C | δ * Duro | + 9 | + 6 | + 8 |
| | δ % Tensile Strength | - 7.45 | + 8.24 | + 9.80 |
| | δ % Elongation | - 25.39 | - 16.05 | - 9.21 |
| | δ % Tear Resistance | - 3.76 | + 14.44 | + 15.35 |

**Example 4**

Olive drab bromobutyl formulation (silica filled), factory mixed (coded 527)

| Bromobutyl X2 | 100.0 |
|---|---|
| Black N-231 | 0.16 |
| Hisil 532 EP | 37.20 |

(continued)

| | |
|---|---|
| Diethylene Glycol | 1.26 |
| Trilene 65 | 3.96 |
| Green | 1.64 |
| Yellow | 2.22 |
| Sunproof Canadian | 0.97 |
| DC 200 (12,500) | 0.97 |
| TP 90 B | 7.44 |
| Zinc Oxide 90% | 5.02 |
| Aminox | 1.93 |
| Methazate | 2.03 |
| Sulphur | 0.29 |
| Silane A 1100 | 0.97 |
| | 166.06 |

Thus, the additive according to the invention is the same as that used in example 3.

Rheometer curve data at 30/minutes/25 range/1° Arc/ 160°C (320°F)

| | |
|---|---|
| T4 | 1.6 minutes |
| T90 | 8.4 minutes |
| T100 (estimated) | 12.5 minutes |

Cure time of compression moulded disc of 5.08 cm in diameter by 1.27 cm (2" ø by by 1/2") thick is 7 minutes at 160°C (320°F). Tensile slabs were moulded for 8 minutes at 160°C (320°F).

Facepieces XC4 large were moulded on a REP m/c by injection. Surface temperature of inside cavity, depending on location were stabilized at 151.6 to 154.4°C (305 to 310°F).

Facepieces were moulded at the following times:.

25 facepieces for 7 minutes;
25 facepieces for 10 minutes

As in the case of the 526, the T4 theometer value was too low at 1.6 minutes. However, as in the example 3, in case of 526, we were able to injection mould the facepieces successfully, with an indication of scorch, ripple flow lines on both sides of the forehead at both cure times.

Some measure of bloom was noticed after 3 days exposure to the plant atmosphere on the 7 minutes facepieces and no bloom on the 10 minutes facepieces.

Ozone resistance by bumbbells stretched to 100%, passed 72 hours, and to date 7 days (173 hours), two cracks developed on one dumbbell, the 7 minutes facepieces. The two 8 minutes tensile dumbbells and the one 10 minutes facepieces dumbbell, show no ozone attack.

| PHYSICAL PROPERTIES | | SLABS | FINISH PRODUCTS | |
|---|---|---|---|---|
| | | 8 minutes | 7 minutes | 10 minutes |
| Hardness Shore *A | | 40 | 46 | 46 |
| Ultimate Tensile Strength MPa(psi) | | 13.36(1938) | 12.75(1849) | 10.51(1524) |
| Ultimate Elongation % | | 691 | 699 | 612 |
| Die C | Tensile Stress at 500% MPa(psi) | 8.93(1295) | 7.87(1141) | 7.86(1140) |
| | Tensile Stress at 200% MPa(psi) | 2.43(352) | 2.03(294) | 2.02(293) |
| Tear Resistance psi KN/M (lb/in.) | | 36.8(209) | 39.9(223) | 41.9(238) |
| Permanent Set 500% | 10/10 | 6.17 | 7.04 | 12.36 |
| Ozone 50 pphm / 40°C | 24 hours | Passed | Passed | Passed |

(continued)

| PHYSICAL PROPERTIES | | SLABS | FINISH PRODUCTS | |
|---|---|---|---|---|
| | | 8 minutes | 7 minutes | 10 minutes |
| Elongation 100% | 48 hours | Passed | Passed | Passed |
| Dumbbell sample | 72 hours | Passed | Passed | Passed |
| Stiffness | T2 | - 32.5 °C | - 31.0 °C | — |
| | T5 | - 41.0 °C | - 39.0 °C | — |
| Resilience Bashore | | 10 | 10 | 11 |
| | with powder | 12 | 12 | 13 |
| Resilience Button (10 minutes) | | 10 | — | — |
| | with power | 12 | — | — |
| Ageing 96 hrs 80 °C | $\delta$ * Duro | + 5 | + 1 | + 1 |
| | $\delta$ % Tensile Strength | - 11.39 | - 5.41 | - 16.14 |
| | $\delta$ % Elongation | - 15.39 | - 24.03 | - 26.96 |
| | $\delta$ % Tear Resistance | - 1.91 | - 5.53 | + 0.42 |

## Example 5

Black Bromobutyl formulation (carbon black filled), factory mixed Code 950, 950 Version II. Modifications based on previous formulation 910.5

| | |
|---|---|
| Bromobutyl X2 | 100.0 |
| Struktol 60 NS | 2.09 |
| MBTS | 1.09 |
| Black N-110 | 19.40 |
| Trilene 65 | 4.18 |
| Black N-774 | 25.37 |
| Sunproof Canadian | 1.00 |
| DC 200 (12,500) | 1.19 |
| TP 90 B | 8.06 |
| PAT 44/04 | 0.60 |
| Diethylene Glycol | 0.20 |
| Zinc Oxide 90% | 4.78 |
| Agerite White | 1.48 |
| Methazate | 0.40 |
| Sulphur | 0.30 |
| | 170.14 |

Thus, the additive according to the invention comprises:

| | |
|---|---|
| Trilene 65 | 4.18 phr, |
| Agerite White | 1.48 phr, and |
| Sunproof Canadian | 1.00 phr |

Version II was successfully mixed, and showed no evidence of premature scorch.
Rheometer curve data at 30/minutes/25 range/1° Arc/ 160°C (320°F)

| | |
|---|---|
| T4 | 1.75 minutes |

(continued)

| | |
|---|---|
| T90 | 7.75 minutes |
| T100 (estimated) | 13.75 minutes |

Cure time of compression moulded disc of 5.08 cm in diameter by 1.27 cm (2" ø by 1/2") thick is 7 minutes at 160°C (320 °F). Tensile slabs were moulded for 6 minutes at 160°(320°F).

Facepieces XC4 large were moulded on a REP m/c by injection. Surface temperature of inside cavity, depending on location were stabilized at 151.6 to 154.4°C (305 to 310 °F). Fifty facepieces with inserts were moulded at 6 minutes total press time. Different cure times were not made for two reasons.

a) previous trials at various cure times showed that cure time did not affect physicals, ozone resistance or bloom.
b) There was not enough time, within the time frame of this contract, to establish what the minimum cure time would be.

This formulation version II behaved well during factory processing and also during the injection moulding. In fact, demoulding was improved with less rejects generated due to tears around the eyeports. However, this is still a critical area, and every possible modification to the undercuts of the eyepiece inserts should be considered.

Physical test results satisfy the present specification requirements.

| PHYSICAL PROPERTIES | | SLABS | FINISH PRODUCTS |
|---|---|---|---|
| | | 6 minutes | 6 minutes |
| Hardness Shore *A | | 46 | 45 |
| Ultimate Tensile Strength MPa(psi) | | 13.81(2003) | 13.87(1997) |
| Ultimate Elongation % | | 670 | 677 |
| Die C | Tensile Stress at 500% MPa(psi) | 9.83(1426) | 9.47(1373) |
| | Tensile Stress at 200% MPa(psi) | 2.94(426) | 2.50(362) |
| Tear Resistance psi KN/M (lb/in) | | 40.1(228) | 39.6(225) |
| Permanent Set 500% | 10/10 | 6.79 | 6.75 |
| Ozone 50 pphm / 40 °C | 24 hours | Passed | Passed |
| Elongation 100% | 48 hours | Passed | Passed |
| Dumbbell sample | 72 hours | * | * |
| Stiffness | T2 | - 29 °C | - 27.0 °C |
| | T5 | - 38 °C | - 37.5 °C |
| Resilience Bashore | | 9 | 9 - 10 |
| | with powder | 11 | 11 - 12 |
| Resilience Button (10 minutes) | | 10 | — |
| | with power | 12 | — |
| Ageing 96 hrs 80 °C | δ * Duro | * | + 5 |
| | δ % Tensile Strength | * | - 8.41 |
| | δ % Elongation | * | - 12.60 |
| | δ % Tear Resistance | * | + 0.15 |

## Example 6

Green bromobutyl formulation (silica filled) factory mixed. Coded 714 version I and 714 version II. Modification based on previous formulations 526, 527 and 528.

EP 0 606 361 B1

| Ingredients | Version I | Version II |
|---|---|---|
| Bromobutyl X2 | 100.00 | 100.00 |
| Black N-231 | 0.17 | 0.17 |
| Hisil 532 EP | 41.76 | 41.76 |
| Diethylene Glycol | 1.31 | 1.31 |
| MBTS | 0.61 | 0.61 |
| Stearic Acid | 0.61 | 0.61 |
| Sulphur | 0.30 | 0.30 |
| Trilene 65 | 4.15 | 4.15 |
| Green 4099 | 1.72 | 1.72 |
| Yellow 2087 | 2.33 | 2.33 |
| Sunproof Canadian | 1.01 | 1.01 |
| DC 200 (12,500) | 0.71 | 0.71 |
| TP 90 B | 5.26 | 5.26 |
| PAT 44/04 | 1.01 | 1.01 |
| Silane A 187 | 2.12 | 2.12 |
| Agerite White | 0 | 1.62 |
| Vistalon 2504 * | 1.82 | 0 |
| Zinc Oxide 90% * | 4.75 | 4.75 |
| Aminox * | 1.62 | 0 |
| Methazate * | 1.62 | 1.62 |
| Total | 172.88 | 171.06 |

* Mixed in masterbatch form

Thus, the additive according to the invention is

| | Version I | Version II |
|---|---|---|
| Trilene 65 | 4.15 phr | 4.15 phr |
| Sunproof Canadian | 1.01 phr | 1.01 phr |
| Agerite White | 0 | 1.62 phr |
| Aminox | 1.62 phr | 0 |

Rheometer curve data at 30/minutes/25 range/1° Arc/ 160°C (320°F)

| | Version I | Version II |
|---|---|---|
| T4 | 1.80 minutes | 1.80 minutes |
| T90 | 9.50 MINUTES | 7.88 MINUTES |
| TOO (ESTIMATED) | 17.50 MINUTES | 13.50 MINUTES |

Cure time of compression moulded disc of 5.08 cm in diameter by 5.27 cm (2" ø by 1/2") thick is 8 minutes at 160°C (320 °F), for both versions. Tensile slabs were moulded for 9 1/2 minutes at 160°C (320°F) for version I and 7 3/4 minutes for version II.

| VERSION I | | | |
|---|---|---|---|
| PHYSICAL PROPERTIES | SLABS | FINISH PRODUCTS | |
| | 9½ minutes | 6 minutes | 8 minutes |
| Hardness Shore *A | 44 | 46 | 45 |
| Ultimate Tensile Strength MPa(psi) | 14.11(2046) | 11.14(1731) | 11.22(1627) |
| Ultimate Elongation % | 757 | 694 | 673 |

11

(continued)

| VERSION I | | SLABS | FINISH PRODUCTS | |
|---|---|---|---|---|
| PHYSICAL PROPERTIES | | | | |
| | | 9½ minutes | 6 minutes | 8 minutes |
| Die C | Tensile Stress at 500% MPa(psi) | 7.46(1082) | 7.60(1102) | 7.41(1074) |
| | Tensile Stress at 200% MPa(psi) | 2.05(297) | 2.08(301) | 1.99(288) |
| Tear Resistance KN/M (lb/in.) | | 34.1(194) | 37.5(213) | 36.3(206) |
| Permanent Set 500% | 10/10 | 8.11 | 9.04 | 7.76 |
| Ozone 50 pphm / 40 °C | 24 hours | Passed | Passed | Passed |
| Elongation 100% | 48 hours | Passed | Passed | Passed |
| Dumbbell sample | 72 hours | Passed | Passed | Passed |
| Stiffness | T2 | - 28.0 °C | - 26.0 °C | - 27.0 °C |
| | T5 | - 36.5 °C | - 36.0 °C | - 37.0 °C |
| Resilience Bashore | | 10 | 12 | 10 |
| | with powder | 12 | 13 | 12 |
| Resilience Button (8 minutes) | | 11 | — | — |
| | with power | 13 | — | — |
| Ageing 96 hrs 80 °C | $\delta$ * Duro | + 1 | + 2 | + 2 |
| | $\delta$ % Tensile Strength | + 4.24 | - 16.00 | - 8.46 |
| | $\delta$ % Elongation | - 10.90 | - 40.20 | - 28.19 |
| | $\delta$ % Tear Resistance | - 7.35 | - 18.78 | - 9.55 |

| VERSION II | | SLABS |
|---|---|---|
| PHYSICAL PROPERTIES | | |
| | | 7 min. 45 sec. |
| Hardness Shore *A | | 46 |
| Ultimate Tensile Strength MPa(psi) | | 12.36(1792) |
| Ultimate Elongation % | | 877 |
| Die C | Tensile Stress at 500% MPa(psi) | 8.44(1224) |
| | Tensile Stress at 200% MPa(psi) | 2.41(349) |
| Tear Resistance KN/M (lb/in) | | 37.0(210) |
| Permanent Set 500% | 10/10 | 9.22 |
| Ozone 50 pphm / 40 °C | 24 hours | Passed |
| Elongation 100% | 48 hours | Passed |
| Dumbbell sample | 72 hours | Passed |
| Stiffness | T2 | - 27.5 °C |
| | T5 | - 36.0 °C |
| Resilience Bashore | | 10 |
| | with powder | 11 |

(continued)

| VERSION II | | |
|---|---|---|
| PHYSICAL PROPERTIES | | SLABS |
| | | 7 min. 45 sec. |
| Resilience Button (8 minutes) | | 11 |
| | with power | 12 |
| Ageing 96 hrs 80 °C | δ * Duro | + 1 |
| | δ % Tensile Strength | - 10.48 |
| | δ % Elongation | - 21.86 |
| | δ % Tear Resistance | - 5.60 |

Facepieces XC4 Large were moulded on a REP m/c by injection. Surface temperature of inside cavity, depending on location, were stabilized at 151.6 to 154.4°C (305 to 310 °F). The facepieces were moulded with inserts. Formulation 714 version I was used to mould 25 facepieces at a 6 minutes cure time and 25 facepieces at an 8 minutes cure time. The two cure times were chosen in order to determine if physicals, ozone resistance or bloom are dependent on cure time.

Formulation 714 version II was used to mould 5 facepieces at a 6 minutes cure time. Formulation 714 version II was used in order to establish if there is any loss in permeability resistance in the version I, due to the content of 1.82 phr of EPDM Vistalon 2504.

At the same time, it should also allow you to establish the prctection efficiency of Aminox versus Agerite White. The reason for the incorporation of the EPDM Vistalon 2504 is that the Aminox, because of its physical shape (flakes), is practically impossible to disperse on an open mill, especially if its melting point (90 °C) is not reached. To ensure complete melting, the compound temperature would have to be raised to 100 °C. This would require the assistance of heated rolls and at this temperature, the cure rate would be affected and the safety would be compromised. For ease of incorporation, a masterbatch containing the Amincx, zinc oxided methazate was prepared as follows:

| | |
|---|---|
| Vistalon 2504 | 1.82 phr |
| Zinc Oxide(90%) | 4.75 phr |
| Aminox | 1.62 phr |
| Methazate | 1.62 phr |

On the other hand, Agerite White is a powder form and dispersion is easier and feasible.

The formulation 714, both version I and II, behaved well during factory processing and also during the injection moulding. Demoulding was easier and less rejects were generated due to tears around the eyeports. However, this still remains a critical area and will be the major cause of a higher than normal reject rate.

Physical test results satisfy the present specification requirement, except for % loss of elongation after oven ageing under conditions of 96 hours at 80 °C. Facepieces exposed to lab atmosphere, to date 15 days, show no bloom on the 714 version 1, and a slight bloom on 714 version II. The difference in colour between the two versions is noticeable, being dictated by the antioxidant used. Ozone resistance by dumbbells stretched to 100 % passed 72 hours exposure of 50 pphm at 40°C.

## Example 7

The following formulation (code C4-02-9011 and C4-01-9011) were tested and found to be within specification. Wherein the proportions of ingredients are expressed as parts per one hundred parts of bromobutyl rubber.

| C4 Facepiece Formula CA-02-9011 | | |
|---|---|---|
| Polysar Bromobutyl X2 | 100.00 | |
| Vistalon 2504 | 2.35 | |
| Trilene 65 | 3.99 | |

(continued)

| C4 Facepiece Formula CA-02-9011 | | |
|---|---|---|
| Paraffin Wax | 1.02 | |
| Stearic Acid | 1.02 | |
| Aminox | 0.51 | |
| Zeosil 175 | 19.86 | |
| Hisil 532 EP | 18.53 | |
| Silane A187 | 1.02 | |
| Green 4099 | 1.74 | |
| Yellow 2087 | 1.95 | |
| Black N231 | 0.17 | |
| TP90B | 5.32 | |
| ZnO (90%) | 4.20 | (3.58-4.61) |
| MBTS or DELAC S | 0.51 | (0.21-1.02) |
| Scorchguard MgO | 0.51 | (0.21-1.02) |
| Methazaate | 1.64 | (1.02-2.05) |
| DC 200 | 1.02 | (0.0-1.02) |
| Polyethelene Wax | 1.02 | (0.0-2.05) |
| Diethylene glycol | 0.00 | (0.0-0.51) |
| Sulphur | 0.72 | |

| C4 Facepiece Formula C4-01-9011 | | |
|---|---|---|
| Polysar Bromobutyl X2 | 100.00 | |
| Vistalon 2504 | 2.35 | |
| Trilene 65 | 3.99 | |
| Paraffin Wax | 1.02 | |
| Stearic Acid | 1.02 | |
| Aminox | 0.51 | |
| Zeosil 175 | 18.53 | |
| Hisil 532 EP | 17.20 | |
| Silane A187 | 1.02 | |
| Black N110 | 2.66 | |
| TP90B | 5.32 | |
| ZnO (90%) | 4.20 | (3.58-4.61) |
| MBTS or DELAC S | 0.51 | (0.21-1.02) |
| Scorchguard MgO | 0.51 | (0.21-1.02) |
| Methazate | 1.64 | (1.02-2.05) |
| DC 200 | 1.02 | (0.0-1.02) |
| Polyethelene Wax | 1.02 | (0.0-2.05) |
| Diethylene Glycol | 0.00 | (0.0-0.51) |
| Sulphur | 0.72 | |

## Claims

1. A composition comprising:

   a) 100 parts by weight halobutyl rubber;
   b) 1.7 to 6 parts by weight of a liquid ethylene-propylene-diene monomer elastomer; and

c) 0.5 to 3 parts by weight of an antioxidant/ antiozonant curing agent selected from para-phenylenediamine and a diphenylene-acetone condensation product.

2.  A composition according to claim 1, additionally comprising 0.5 to 1.02 parts by weight of a wax selected from petroleum wax and microcrystalline wax.

3.  A composition according to claim 2, additionally comprising 3 to 6 parts by weight of a metal oxide curing agent.

4.  A composition according to claim 3, which comprises 3.5 to 4.5 parts by weight zinc oxide as the metal oxide.

5.  A composition according to claim 4, additionally comprising 0.5 to 3 parts by weight of zinc dimethyldithiocarbamate.

6.  A composition according to any preceding claim, wherein the halobutyl rubber is bromobutyl rubber.

7.  A composition according to any preceding claim, wherein the curing agent is a diphenylene-acetone condensation product.

8.  A composition according to any of claims 1 to 6, wherein the curing agent is para-phenylenediamine.

9.  A composition according to any preceding claim, which is silica-filled.


**Patentansprüche**

1.  Zusammensetzung umfassend:

    a) 100 Gewichtsteile Halogenbutyl-Kautschuk;
    b) 1,7 bis 6 Gewichtsteile eines flüssigen Ethylen-Propylen-Dien-Monomer-Elastomers; und
    c) 0,5 bis 3 Gewichtsteile eines aus p-Phenylendiamin und einem Diphenylen-Aceton-Kondensationsprodukt ausgewählten antioxidierenden/antiozonierenden Vulkanisationsmittels.

2.  Zusammensetzung nach Anspruch 1, welche zusätzlich 0,5 bis 1,02 Gewichtsteile eines aus Erdölwachs und mikrokristallinem Wachs ausgewählten Wachses umfaßt.

3.  Zusammensetzung nach Anspruch 2, welche zusätzlich 3 bis 6 Gewichtsteile eines Metalloxid-Vulkanisationsmittels umfaßt.

4.  Zusammensetzung nach Anspruch 3, welche 3,5 bis 4,5 Gewichtsteile Zinkoxid als Metalloxid umfaßt.

5.  Zusammensetzung nach Anspruch 4, welche zusätzlich 0,5 bis 3 Gewichtsteile Zinkdimethyldithiocarbamat umfaßt.

6.  Zusammensetzung nach irgendeinem vorhergehenden Anspruch, worin der Halogenbutyl-Kautschuk Brombutyl-Kautschuk ist.

7.  Zusammensetzung nach irgendeinem vorhergehenden Anspruch, worin das Vulkanisationsmittel ein Diphenylen-Aceton-Kondensationsprodukt ist.

8.  Zusammensetzung nach irgendeinem der Ansprüche 1 bis 6, worin das Vulkanisationsmittel p-Phenylendiamin ist.

9.  Zusammensetzung nach irgendeinem vorhergehenden Anspruch, welche mit Kieselsäure gefüllt ist.


**Revendications**

1.  Composition comprenant

    a) 100 parties en poids de caoutchouc halogénobutyle;

b) 1,7 à 6 parties en poids d'un élastomère liquide 5 de monomères éthylène-propylène-diène; et

c) 0,5 à 3 parties en poids d'un agent de durcissement antioxydant/antiozonant choisi parmi une para-phénylènediamine et un produit de condensation diphénylène-acétone.

2. Composition selon la revendication 1, comprenant de plus de 0,5 à 1,02 parties en poids d'une cire choisie parmi une cire de pétrole et une cire microcristalline.

3. Composition selon la revendication 2, comprenant de plus 3 à 6 parties en poids d'un agent de durcissement à 15 oxyde métallique.

4. Composition selon la revendication 3, qui comprend 3,5 à 4,5 parties en poids d'oxyde de zinc comme oxyde métallique.

5. Composition selon la revendication 4, comprenant de 20 plus 0,5 à 3 parties en poids de diméthyldithiocarbamate de zinc.

6. Composition selon l'une quelconque des revendications précédentes, dans laquelle le caoutchouc halogénobutyle est du caoutchouc bromobutyle.

7. Composition selon l'une quelconque des revendications précédentes, dans laquelle l'agent de durcissement est un produit de condensation diphénylène-acétone.

8. Composition selon l'une quelconque des 30 revendications 1 à 6, dans laquelle l'agent de durcissement est une para-phénylènediamine.

9. Composition selon l'une quelconque des revendications précédentes, qui contient de la silice.